# EUROPEAN PATENT APPLICATION

(11) **EP 0 947 419 A1**
(43) Date of publication of application: **06.10.1999**
(21) Application number: 99105830.6
(22) Date of filing: 23.03.1999
(51) Int. Cl.: B63B 13/00, F16K 31/122

(54) **Ballasting facilities for ships**

(30) Priority: 01.04.1998 IT GE980023
(71) Applicant: STUDIO TECNICO PIER GIORGIO TORRIGLIA, 17015 CELLE LIGURE (SV) (IT); Omnitech Tecnologie Industriali S.r.l., 17012 Albissola Marina (SV) (IT)
(72) Inventor: Torriglia, Pier Giorgio, 17015 Celle Ligure (SV) (IT)
(74) Representative: Ferrarotti, Giovanni

(57) **Abstract**

Ballasting facilities for ships (1) and watercraft consisting of a liquid ballast header (4) located on the bottom along the keel of the ship (1) and conveying the liquid ballast from the pumping station (8) to each ballast compartment or group of compartments (2) and vice versa, this header (4) being formed by two side walls (5) and a top cover (6) including a pneumatic valve (12) mounted inside the side wall (5) of the header (4) serving each compartment (2), this valve (12) having the function to shut-off or not shut-off the liquid ballast flowing from the header (4) into the compartment (2) and vice versa while the valve (12) is fitted with a small end-of-stroke valve (34) that monitors the open/closed position of the valve (12).

## Description

Water ballasting of ships and water craft in general is based on double wall and bottom ballasting systems, connected to the feed and drain pumps located in the pump house; the ballast water either being pumped (comb type) through longitudinal pipes into the double bottom starting from the foreward to the aft compartments or (dry ring type) through a main loopline mounted in a dry ring type keel duct and provided with shut-off and distributing valves serving each compartment along the dry ring type keel duct. If there is no dry ring, the main loopline runs directly through the compartments in which the distributing valves are mounted and remote controlled and monitored (wet ring type).

All these standard facilities have however drawbacks regarding their installation and maintenance. "Comb type" systems are indeed very expensive as to materials and installation; in addition, the pipes are installed during the prefabrication stage and reduce the accessibility to the compartments, especially in the ballast compartments abaft where these pipes are more numerous.

The "dry ring type" system in the keel duct is less expensive as far as the piping is concerned but requires a large inspection tunnel, all valves are remote controlled from outside and the ballast volume is reduced because of this dry duct.

When using a "wet ring type" system, it is possible to take the maximum advantage of the ballast volume but the distributing valves are mounted in the various compartments even though in recent designs each distribution valve is mounted in the adjacent compartment.

However, this system is normally very expensive because it is necessary to use corrosionproof materials for valves acting in sea water and for remote control systems fitted with fluid immersed actuators.

To avoid the above mentioned disvantages the GB-A-2.174.347 and US-A-3.209.715 relate to a ballast system for vessels provided with a central duct in the double bottom steel structure and this central duct estends along the bottom of the vessel to the forward ballast water tank. This central duct acts as a large pipe in which water is transferred by pumps to and from a series of ballast tanks on both sides of the duct. Individual remote operated valves are provided in the side structure of the duct through which the water is transferred into and from the tanks. Examples of these remote operated valves are shown in the documents GB-A-2.174.347 and NL-A-288.742.

These solutions have the aim to eliminate the above mentioned drawbacks of the known facilities utilized for ballasting and ballast monitoring on board of ships, in particular by eliminating the large number of pipes now used for feeding and discharging the various compartments.

The present invention has the aim to present new special remote controlled pneumatic valves which better the function for feeding and discharging each compartment with exactness and velocity and, according to this invention, these pneumatic valves are mounted on the internal wall of the keel duct and are remote air controlled from the ballast control panel in the cargo control room, where all valves monitoring and control switchgears are located together with their open/closed position indicators. In case of pneumatic locking or emergency, the system automatically closes all valves thus preventing any communication between the water ballast compartments.

The pneumatic valves, according to this invention, are secured to the internal side walls of the keel duct; these side walls also form the internal walls of the ballast compartments. The valves are fastened by flanges and at the base of these flanges, which are virtually adjacent to the bottom, the bottom will be protected by abrasion resisting stainless steel plates.

In short, the valve subject matter of this invention consists of a flange to be secured to the above mentioned wall of the keel duct and features a valve seat in which a press block or shutter is directly bolted to the rod of a pneumatic piston, while the seat and press block are machined to form an airtight seal. The lock head or shutter will open in direction of the ballast compartment and a pressure spring inside the pneumatic cylinder keeps the valve closed in case of pneumatic lock or whenever the pressure difference between the full keel duct and the empty ballast compartment reaches 2 bar.

The air cylinder is therefore connected to the ship's compressed air system and a pressure ranging between 6 and 8 bar is usually sufficient to open the valve with up to 2 bar back-pressure when the keel duct is empty and the ballast compartment filled up. The cylinder and the shutter have a stroke length of about 80 mm. if a DN 150 (6") valve is used which is suitable for ships equipped with pipes and shut-off valves of the same size, so as to ensure a cross section opening about 226 cm² greater than the pipe cross section.

Each pneumatic cylinder of the valves is connected by a main control pipe to the compressed air system by means of a monitoring board on which the operator reads the opening/closing state of the valves.

Another compressed air operated indicator tube connects a small pneumatic end-of-stroke valve to the monitoring panel; this small end-of-stroke valve is actuated by the pneumatic piston rod of the valve in question.

When the control switch on the panel is turned "ON", the compressed air flow will reach the cylinder chamber and will cause opening of the piston while at the same time closing the connection with the signal line. Therefore, as soon as the operator "opens" this control switch, the compressed air will move the piston and will close the small end-of-stroke valve in a few seconds while indicating that the valve has been opened. These valves may either be opened separately or in groups to permit adjustment of the ballast in one or more compartments at the same time.

It is clear that the facilities subject matter of this invention are extremely useful for an easy and low-cost ballasting of ships, with the possibility of easy maintenance of the water ballast regulating valves. The only drawback of this system is the fact that ballasting and unballasting requires more time since the keel duct can only perform one operation at a time. The pumps must fill or empty the keel duct before they can operate in the compartment; in addition, the ballast cannot be transferred from one compartment to another, even though ballast water is not often transferred. The average loss of time will range between 5% and 10% but this loss is largely compensated by the huge practical and economic advantages deriving from this invention.

The invention in question is illustrated in its practical and examplifying implementation in the enclosed drawings in which:

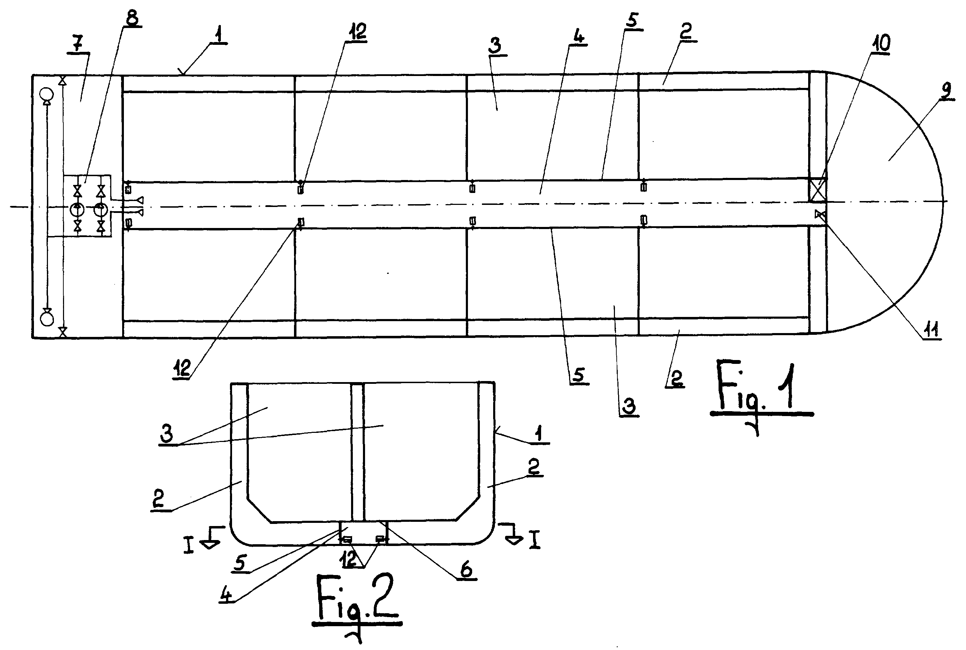

Fig. 1 shows a horizontal section of a ship according to I-I in Fig. 2,
Fig. 2 shows a cross section of the ship in Fig. 1,
Fig. 3 shows a longitudinal section of the ballast flow regulating valve,
Fig. 4 shows a frontal view from the left of the valve shown in Fig. 3,
Fig. 5 shows the section according to II-II of the valve in Fig. 3,
Fig. 6 shows the section according to III-III in Fig. 4,
Fig. 7 shows the section according to IV-IV in Fig. 4,
Fig. 8 shows the section according to V-V in Fig. 3,
Fig. 9 shows a rear view from the right of the valve in Fig. 3.

With reference to this Figures, an example of the invention is given by the ship 1 featuring the ballast compartments 2 and the cargo tanks 3.

A ballast header 4 formed by two side walls 5 (centre keelson) and a cover 6 (double bottom ceiling) is located in the center part of the keel, the two side walls 5 are also acting as internal longitudinal vertical partitions of the bottom ballast compartments on the port and starboard side.

The pumping station 8 is located at the aft end 7 of the ballast fluid header 4 from where the water is pumped from the sea into the header or vice versa to pump the ballast water from the header 4 and discharge it into the sea.

For indicatory purposes, a lock-out chamber 10 for the crew and for venting and a service valve 11 for the fore compartment are located at the bow line 9.

Each ballast compartment 2 is connected to the ballast header 4 by special pneumatic valves 12 that will be described hereinafter, having the function to feed and discharge the ballast compartments 2 from and into the ballast header 4 which in turn is filled or discharged by the pumping station 8.

The above description clearly shows the simple technical design, construction and maintenance of this ballasting system since no piping is required to convey the ballast liquid to and from the compartments 2, this function being completely performed by the ballast header 4 along the keel.

In practise, according to this invention, the control and service tubes of the pneumatic valves 12 connecting - as will be explained below - the ballast header 4 to each compartment 2, are the only pipes required for this ballasting system.

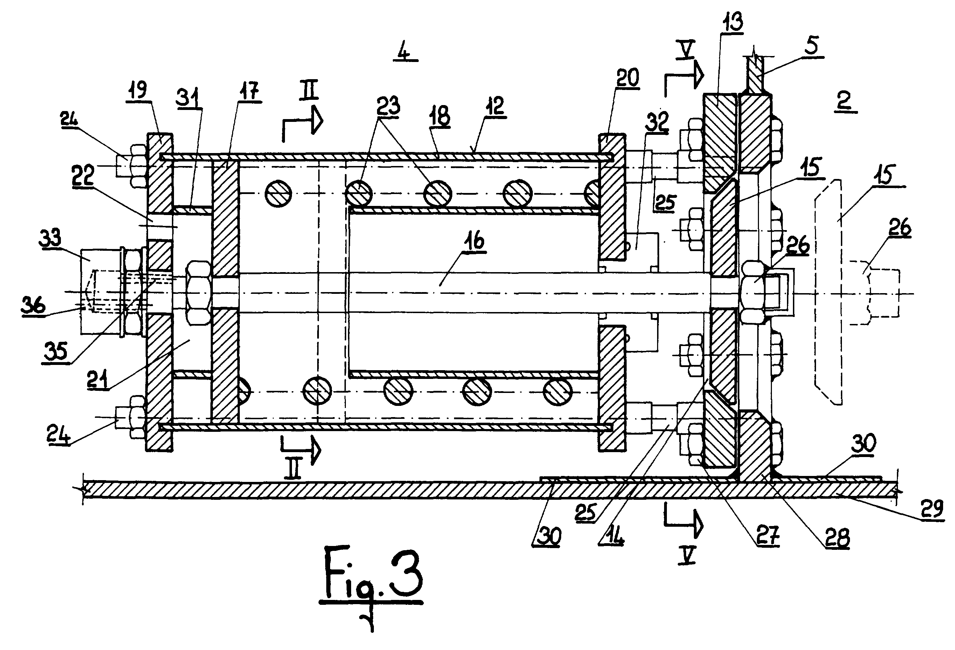

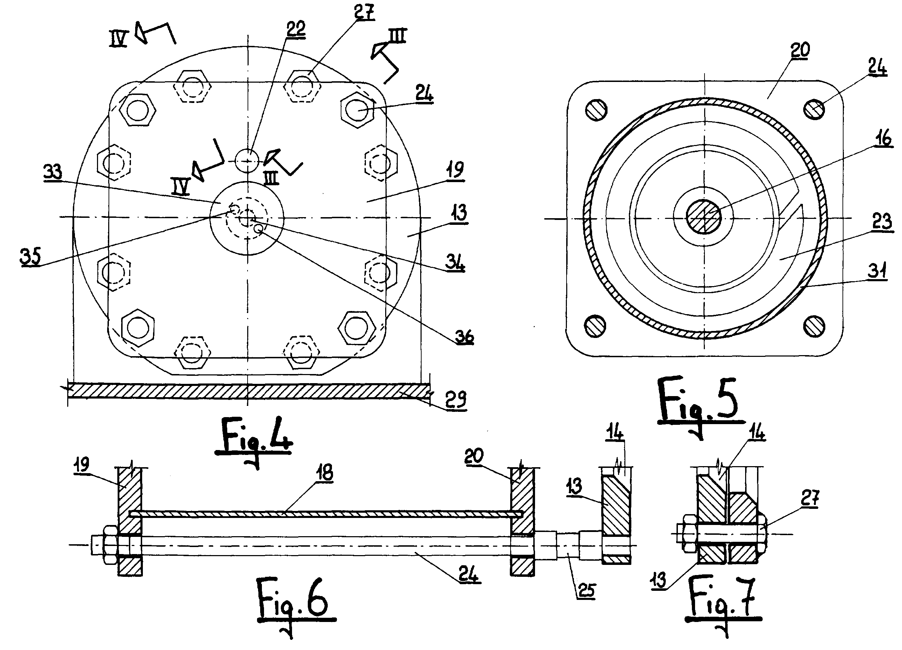

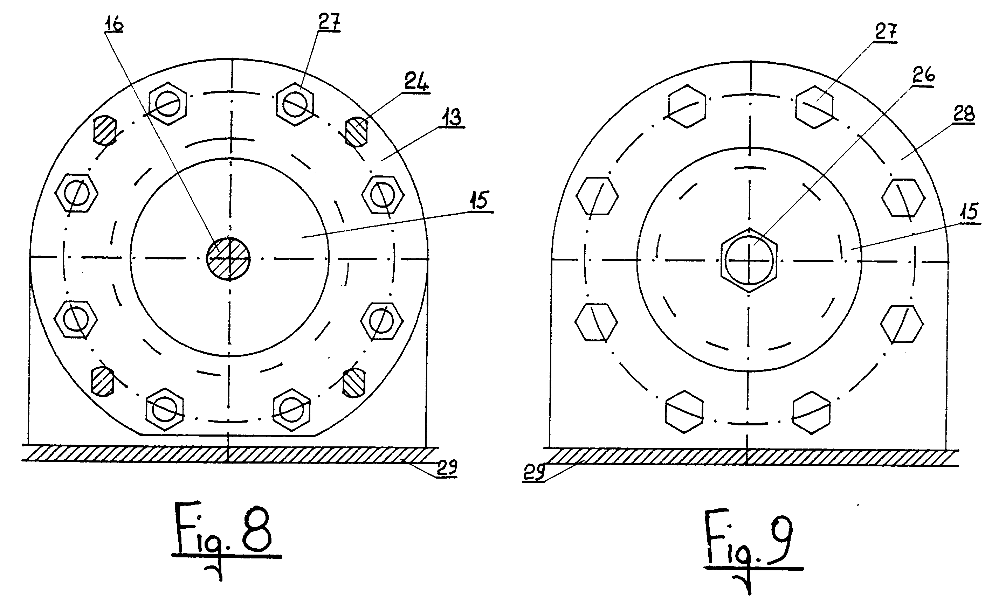

This feed and discharge valve 12 of each compartment 2 is illustrated in the Figures 3 thru 9.

The valve 12 essentially consists of a flange 13 provided with a sealing seat 14 against which is acting the head of the shutter or lock head 15 fastened by bolt 26 onto the rod 16 fitted at its end opposite the head 15 with a piston 17 air-tight sliding in a liner 18.

The chamber of the flow-dynamic piston 17 is completed by two flanges 19, 20 of which the flange 19 is external whilst the flange 20 is in front of the lock head 15 thus creating an air tank 21 receiving compressed air through the opening 22. A properly shaped elastic element such as a spiral pressure spring 23 will balance the compressed air induced opening of the piston head 15, while returning the valve in closed position as soon as the compressed air is no longer acting in the air tank 21.

The function of the spiral pressure spring 23 is that it provides to close the valve always in case of pneumatic locking or emergency.

The flanges 19 and 20 are assembled by tie rods 24 whereas the piston casing is secured to the closing flange 13 by extensions 25 of the tie rods 24.

According to a preferential execution of this invention, the flange 13 of the above valve fitted with a sealing seat 14 is secured by bolts 27 to another flange 28 inserted in the lower part of the partition wall 5 between the ballast header 4 and each of the ballast compartments 2 and preferably, the lower keel wall 29 is abrasion protected by suitable stainless steel plates 30.

On the outside of the valve 12 is mounted a protective casing 33 in which to house a small pneumatic end-of-stroke valve 34 which transmits the open/closed state of this valve to the control panel.

This end-of-stroke valve 34 is activated by the end of the piston rod 16 and permits or prevents the compressed air to flow through the internal port 35 and external port 36 into the valve from where the air reaches the control board through a proper duct to inform the operator about the open or closed state of the valve.

An end-of-stroke cylinder 31 or any other equivalent device is located inside the air tank 21 to block the piston 17 and prevent an excessive strain on the small end-of-stroke valve 34, while the rod 16 passes through the intermediate flange 20 by means of sealing devices 32 in order to maintain the air pressure and prevent water from entering the piston chamber of the valve 12.

As already explained above, the ballasting system according to this invention offers important installation and maintenance advantages although the operations require more time since the ballast water must be let into or discharged from the ballast header before it is possible to act on the ballast in the compartments. This drawback of the impossibility to fill or discharge at the same time two or more ballast compartments is however more of theoretical than practical nature since it is seldom required.

## Claims

1. Facilities for ballasting ships (1) and other watercraft including:
- double bottom compartments (2) with double port-side and starboard-side walls in which to receive liquid ballast,
- a pumping station (8) usually located abaft to feed the ballast water into and discharge it from these compartments (2),
- a header (4) located on the bottom running along the whole keel of the ship (1) and conveying the liquid ballast from the pumping station (8) to each compartment or group of ballast compartments (2) and vice versa, this fluid ballast header being formed by two side walls (5) and by a top cover (6) so that these side walls (5) are also acting as internal vertical longitudinal walls of the port and starboard sided ballast bottom compartments (2),
- a control and monitoring switchboard for control and adjustment of the required ballast,
characterized in that a pneumatic flow control valve (12) is mounted inside the wall (5) of the ballast header (4) serving each ballast compartment (2), this valve (12) having the function to shut or not to shut-off the ballast flow from the header (4) to the compartment (2) and vice versa, each valve (12) being mounted inside the ballast header (4) on the wall (5) separating this header from each compartment (2) and including a flange (13) complete with sealing seat (14) in which is acting the lock head or shutter (15) connected by a bolt (26) to the rod (16) fitted at its end opposite the head (15) with a piston (17) sliding in an air-tight liner (18), the flow-dynamic piston chamber (17) being provided with two flanges (19, 20) of which the flange (19) is external and the flange (20) is located in front of the lock head (15) so as to create an air tank (21) receiving, during closing, compressed air through a port (22), the above piston (17) being activated by an elastic element (23) such as a spiral spring, whereas the flanges (19, 20) are assembled by the rods (24) also blocking the closing flange (13) by means of extensions (25).

2. Facilities as by claim 1, characterized in that a small pneumatic end-of-stroke valve (34) is provided for each ballast flow control valve (12) having this small pneumatic valve (34) the function to monitor the open/ closed position of each ballast shut-off valve (12) and to transmit the related data to the control and monitoring board, whereas this pneumatic valve (34) is activated by the end of the piston rod (16) and it permits or prevernts the compressed air to flow through internal port (35) and external port (36) into the valve from where the air reaches thr ough a proper duct the control board

3. Facilities as by claim 1, characterized in that cylinders (31) or other mechanical devices blocking the end of the piston (17) stroke are located inside the chamber of the piston (17).

4. Facilities as by claim 1, characterized in that the rod (16) passes through the intermediate flange (20) by means of the sealing devices (32) so as to maintain the air pressure and to prevent water from entering the piston chamber (21) of the valve (12).

5. Facilities as by claim 1, characterized in that the flange (13) with its sealing seat (14) of the pneumatic valve (12) is secured by bolts (27) to another flange (28) fitted into the partition wall (5) between the ballast header (4) and each ballast compartment (2).
